# EUROPEAN PATENT SPECIFICATION

(11) **EP 4 120 063 B1**
(45) Date of publication and mention of the grant of the patent: **27.08.2025**
(21) Application number: 22183151.4
(22) Date of filing: 05.07.2022
(51) Int. Cl.: G06F 3/16

(54) **ALERT SYSTEM AND METHOD FOR VIRTUAL REALITY HEADSET**
WARNSYSTEM UND VERFAHREN FÜR KOPFHÖRER MIT VIRTUELLER REALITÄT
SYSTÈME ET PROCÉDÉ D'ALERTE POUR CASQUE DE RÉALITÉ VIRTUELLE

(30) Priority: 15.07.2021 GB 202110199
(43) Date of publication of application: 18.01.2023
(73) Proprietor: Sony Interactive Entertainment Inc., Tokyo 108-0075 (JP)
(72) Inventor: UBERTI, David, London, W1F 7LP (GB)
(74) Representative: D Young & Co LLP

(56) References cited:
- EP-A1- 3 306 372
- US-A1- 2014 364 212
- US-A1- 2018 260 187
- US-A1- 2019 068 529
- US-B1- 10 354 651
- US-B1- 9 877 100

## Description

### BACKGROUND OF THE INVENTION

### Field of the invention

The present invention relates to an alert system and method for a virtual reality headset.

### Description of the Prior Art

A particular benefit of virtual reality is the ability of the user to immerse themselves within the experience provided. Typically this involves the user wearing a virtual reality headset otherwise known as a head mounted display, which provides a stereoscopic display of the virtual environment (typically generated by an entertainment device such as a videogame console, personal computer or the like, or by the head mounted display itself) in place of the user's normal field-of-view. It also typically involves the user wearing headphones such as stereoscopic or binaural headphones to provide audio immersion that complements the video immersion provided by the display.

As a result the user can be to a large or complete degree shut off from the real world, at least with respect to sound and vision.

However, it may be desirable for the user to still have some situational awareness of the real world around them whilst using virtual reality in this manner. Previously proposed arrangements are disclosed by EP 3 306 372 A1, which relates to a head-mounted device (HMD) informing the user of a sound event sensed through the microphone when said sound event satisfies a preset condition, US 2018/260187 A1, which relates to a head-mounted device (HMD) 100 and a headphone device 30 with a noise cancellation able to give a sound notification to the user A so that the user can easily hear the surrounding sound and talk with the surrounding person X in real time on the basis of image information and sound information which are being monitored, US 9 877 100 B1, which relates to a method for audio sensing to alert device user involving identifying alert trigger to external human voice signal not associated with user and interrupting operation of headset interface to identifying alert trigger, and US 2019/068529 A1, which relates to a head-mounted device (HMD) that has a content application for displaying augmented reality content in display based on location information of user.

The present invention seeks to alleviate or mitigate this need.

### SUMMARY OF THE INVENTION

Various aspects and features of the present invention are defined in the appended claims and within the text of the accompanying description.

In a first aspect, an alert method for a head mounted display is provided in accordance with claim 1.

In another aspect, an alert system for a head mounted display is provided in accordance with claim 11.

### BRIEF DESCRIPTION OF THE DRAWINGS

A more complete appreciation of the disclosure and many of the attendant advantages thereof will be readily obtained as the same becomes better understood by reference to the following detailed description when considered in connection with the accompanying drawings, wherein:
- Figure 1 is a schematic diagram of an alert system for a head mounted display in accordance with embodiments of the present description.
- Figure 2 is a flow diagram of an alert method for a head mounted display in accordance with embodiments of the present description.

### DESCRIPTION OF THE EMBODIMENTS

An alert system and method for a virtual reality headset are disclosed. In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

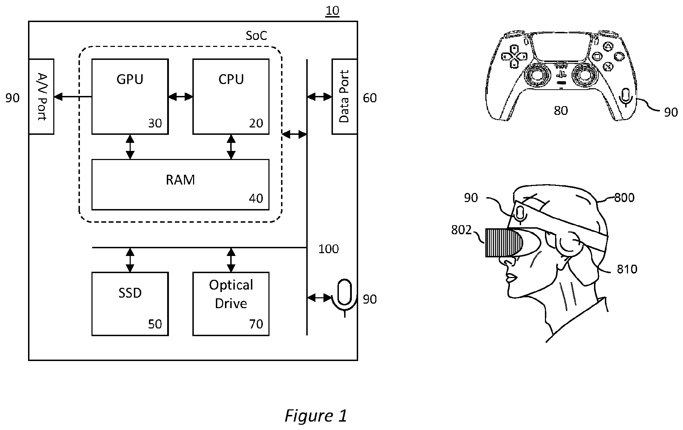

Referring now to the drawings, wherein like reference numerals designate identical or corresponding parts throughout the several views, Figure 1 shows an example of an entertainment system 10 is a computer or console such as the Sony ^{®} PlayStation 5 ^{®} (PS5).

In an example embodiment of the present description, the entertainment system 10 comprises a central processor 20. This may be a single or multi core processor, for example comprising eight cores as in the PS5. The entertainment system also comprises a graphical processing unit or GPU 30. The GPU can be physically separate to the CPU, or integrated with the CPU as a system on a chip (SoC) as in the PS5.

The entertainment device also comprises RAM 40, and may either have separate RAM for each of the CPU and GPU, or shared RAM as in the PS5. The or each RAM can be physically separate, or integrated as part of an SoC as in the PS5. Further storage is provided by a disk 50, either as an external or internal hard drive, or as an external solid state drive, or an internal solid state drive as in the PS5.

The entertainment device may transmit or receive data via one or more data ports 60, such as a USB port, Ethernet ^{®} port, WiFi ^{®} port, Bluetooth ^{®} port or similar, as appropriate. It may also optionally receive data via an optical drive 70.

Iinteraction with the system is typically provided using one or more handheld controllers 80, such as the DualSense ^{®} controller in the case of the PS5.

Audio/visual outputs from the entertainment device are typically provided through one or more A/V ports 90, or through one or more of the wired or wireless data ports 60.

Where components are not integrated, they may be connected as appropriate either by a dedicated data link or via a bus 100.

An example of a device for displaying images output by the entertainment system is a head mounted display 'HMD' 802, worn by a user 800.

As noted elsewhere herein, such an HMD typically provides a stereoscopic display to the user 800, typically from respective image display units (not shown) such as OLED or backlit LCD displays placed in front of the user's eyes and typically modified by suitable optics (again not shown) interspersed between the displays and the user's eyes, or are provided by other suitable technologies such as light guides from a display source.

The HMD may incorporate headphones 810, which may be integral to the HMD (as shown in figure 1), or maybe first party or third party headphones re-attachable to the HMD (for example via a headphone jack or USB port on the HMD providing suitable audio signals), or maybe entirely separate first party or third party headphones independently wearable but during use receiving suitable audio signals for the virtual reality experience, typically from the entertainment device or the HMD, for example via Bluetooth or a wired connection.

In addition, the HMD 802, the handheld controller 80, entertainment system 10, and/or the headphones 810 may comprise one or more microphones 90 for detecting ambient audio signals.

The signals may then be relayed to an audio processor, typically either in the entertainment device 10 or the head mounted display 802, or having its function shared between these devices. For example, the audio processor may be included in the system on a chip comprising the CPU 20, or the CPU and/or GPU operating under suitable software instruction may implement some or all of this processor's function.

Typically the signals are relayed for example via a wired or wireless connection, such as a Bluetooth connection. In a case where the microphone is located in the device comprising the audio processor, then the signal may be relayed via a bus, such as bus 100 in the entertainment device 10.

In an embodiment of the description, the audio processor implements a voice recognition scheme, or more specifically a speaker recognition scheme.

typical voice or speaker recognition scheme associates formant structure within voiced speech with an individual. The formant structure is reflected in the spectral envelope of a user's speech. Variations in formant structure are caused by resonances in different parts of the vocal cavity, and hence are characteristic of the relative shape and size of mouth, throat, and nasal cavities of a person.

Typically within small groups of people this is sufficiently unique to identify an individual.

The formant structure, or more generally the spectral envelope or mean spectral envelope, can be detected for example by a Fourier transform of received audio signals comprising speech, optionally transformed into a relatively small number of wide frequency range bins, which serves to reduce computational complexity. Hence for example instead of dividing a frequency range for example from 0 to 8 kHz into 256 bins as may typically occur in a spectrogram, the range may be divided into 16 or 32 bins instead.

Optionally the resulting spectrum, or a more conventional narrower bin spectrum (for example if such a spectrum is available using existing hardware), can be subjected to a further Fourier transform to create a so-called cepstrum. Again variations in formant structure are reflected in such a cepstrum. An advantage of this second step is that the spectrum can be transformed into yet fewer bins of a cepstrum. The cepstrum typically also does not retain or reflect the fundamental voice frequency of the speech, thereby removing this source of variability from the recognition process.

Whilst a spectrum or cepstrum may be used, any other suitable variants may also be considered such as outputs from a filter bank instead of a Fourier transform spectrum, or use of a so-called mel-cepstrum (a perceptually weighted cepstrum), or augmenting the outputs of any of these with first or second derivatives of the outputs to model dynamic changes.

In any event, the resulting signal properties indicative of a user, such as those reflecting the mean spectral envelope, spectral envelope, and/or formant structure of a user can be detected and associated with that particular user. This may be done for example using a discriminator such as a hidden Markov model, neural network, or other machine learning system, or parametrically by determining means and variances for ratios between different formant peaks or corresponding features of the data.

Whilst speaker recognition schemes are more robust when a keyword or phrase I used, because it enables a more consistent example set of signal properties to be learned by the discriminator, this is not essential, particularly when only a handful of speakers are required to be distinguished between.

This would be the typical scenario within a shared household or family. Within a family in particular, there is likely to be a relatively large difference in user voice characteristics between members of the household, making distinguishing between users robust even when keywords or phrases are not used or uttered.

The audio processor can then identify the voice of the current wearer of the HMD, if the voice of the current wearer has previously been identified (e.g. learned by the discriminator).

The association of the identified voice with the current wearer of the HMD can be achieved in a number of ways, including audio only, a mix of audio and video, and video only.

Using audio only, it may be achieved using one or more microphones 90 mounted on the HMD and/or on the controller, which will be most proximate to the current user and/or optionally arranged to selectively receive utterances from the user, for example due to cardioid directionality of the microphone, or the use of beamforming via a microphone array, or simply proximity.

Alternatively or in addition, the timing of signals from one or more microphones on the HMD and/or the controller may be used to determine the relative distance of these microphones from the source of the voice; it will be appreciated that the relative distance to a user's mouth between an HMD and a handheld controller will have a characteristic disparity in timing in normal use, with the HMD receiving the sound much earlier than the handheld controller due to their relative proximities. Meanwhile the voice of a separate person in the room is more likely to reach both microphones at substantially the same time, or in any event at relative times unlikely to replicate those characteristic of the wearer of the HMD.

Using a mix of audio and video, then alternatively or in addition, a correlation between voiced utterances and an image of the user's mouth moving may be used, for example based upon a camera associated with the entertainment device or the HMD for tracking the user whilst wearing the HMD.

Similarly alternatively or in addition, a correlation between the relative timing of signals received by one or more microphones (for example a stereo pair of microphones associated with a camera tracking the user) and the apparent position of the user within an image captured by that camera can be used to identify the individual as the wearer of the HMD.

Using video only, it will be appreciated that an image of a user may also be associated with the identified voice; consequently the user may be visually recognised by comparison with this reference image or suitable abstraction thereof (for example using eigenfaces), for example when putting the HMD on. This may be achieved by a camera associated with the entertainment device or the HMD.

In any event, the current wearer of the HMD may thus be identified and consequently also the voice of the current wearer of the HMD is known to the audio processor.

Consequently, the audio processor can implement an alert system for the user whereby any voice that is not the voice of the user currently wearing the HMD, which is picked up by one or more of the microphones 90, can be relayed to the user via the headphones 810.

Advantageously, this enables other people in the real world environment to still communicate with a user immersed in the virtual reality environment as necessary.

Further advantageously, optionally the user immersed in the virtual reality environment can selectively mute other individuals; for example if the user does not want to hear from a particular member of the household, they can indicate this via a user interface (for example pressing a particular button on the controller, or selecting the option from an interface displayed to them).

The user interface may for example comprise a pop-up dialogue box that appears as the audio is presented to the user, allowing the user for example to select to pause the game, mute the individual being heard, turn off the HMD, and/or any other suitable options.

Subsequently when that same member of the household talks again, their voice is not relayed to the current user of the HMD, for example for a predetermined period of time or until the current virtual reality session ends.

Alternatively or in addition, rather than allowing people to talk to the current user by default and then adding people to a temporary blacklist, the system may not allow people to talk to the current user by default, and people can then be added to (or removed from) a white list, optionally permanently or on a per session basis.

In any event, optionally this muting function can be overridden by an emergency word or phrase that is relayed to the current user of the HMD regardless of who says it. For example after the emergency word or phrase has been uttered, any ambient sound, and/or any speech, detected by the or each microphone is relayed to the user for a predetermined period of time.

Is noted above, the system can relay speech to the user of the HMD, and optionally can selectively mute or allow speech from certain individuals.

Typically this comprises buffering detected speech and analysing it to determine whether the voice is recognised; if so then the identity of the speaker is compared with the list of speakers who are currently neutered or allowed, and the buffered speech is then relayed to the user or not accordingly.

Aternatively or in addition, where a camera associated with the entertainment device or the HMD can see another person in the room, then if the uttered speech is not that of the user, it can be assumed to be spoken by the other person. Consequently visual recognition of the other person may be used to identify them or to confirm their identity as determined from their voice.

Where a person other the current user of the HMD speaks and they are not recognised, then their vocal characteristics, as described elsewhere herein, can be learned to be recognised, and they can be assigned as a currently unknown but recognised third-party the purposes of being blacklisted or white listed for audio pass-through to the user of the HMD. The current user of the HMD can then optionally provide an identity (e.g. a name) for that third party for future reference.

It will be appreciated that typically the use of the HMD is listening to audio conversion environment via headphones, and hence audio from the virtual environment will not be audible within the real-world environment.

However, it is possible that audio from the virtual environment is played audibly for example via a television or surround sound system, for example for the benefit of the or each additional person in the room (for example in a so-called social screen mode, where the viewpoint of the use of the HMD, or a separate viewpoint of the first environment is provided on a television for the benefit of other people).

In this case, it is possible that audio including speech originating from the virtual environment may be picked up by the or each microphone being used to provide signals the audio processor for audio pass through to the user of the HMD.

Consequently, optionally the audio processor compares received microphone signals with the audio signal being output (typically by the audio processor itself) and discounts such audio or subtracts it from the overall received signal to detect any residual real-world speech. Typically there will be a short delay between the generation of audio by the audio processor and its output and subsequent reception by microphones, and so the audio processor or entertainment device may maintain a buffer of output audio to enable a comparison with a delayed version. Typically any such delay will be relatively stable once determined; the delay due to any output path of the entertainment device, and audio processing of the television or a surround sound system will typically be fixed or only have small variability, and the propagation delay from the speakers to the microphones will typically remain similar unless the user moves around the room to a large extent, which is generally unlikely when they are wearing an HMD. Hence once a representative delay has been determined, for example using correlation between buffered output sound and sound from the microphones, then any evolving change in the delay can be efficiently tracked from the current delay estimate, and the delayed version of the output audio from the buffer can then be used to remove or compensate for that audio as detected by the microphones.

In this way, both self-utterances from the current user of the HMD and audio from the virtual environment are not relayed to the user, whilst speech from other people that is detected by the or each microphone supplying the audio processor can be related to the user, and optionally one or more such recognised people may be muted or white listed. Meanwhile optionally an override word or phrase may be used to force speech and/or all sound (optionally with the exception of audio from the virtual environment) to be relayed to the user of the HMD.

A typical use case for this arrangement is when two people share an HMD during a playing session; for a period of time user A is wearing HMD, and so their own voice is not relayed to them whilst the voice of user B is. Then the users swap the HMD, and now the voice of user B is not relayed as they are the current user, but the voice of user A is as they have become the third party.

In this way, by identifying the current user and only relaying other people's voices (optionally selectively, as described elsewhere herein), the current user of the HMD maintains situational awareness, even if the HMD is shared between a group of people within the same room so that the current user changes with time.

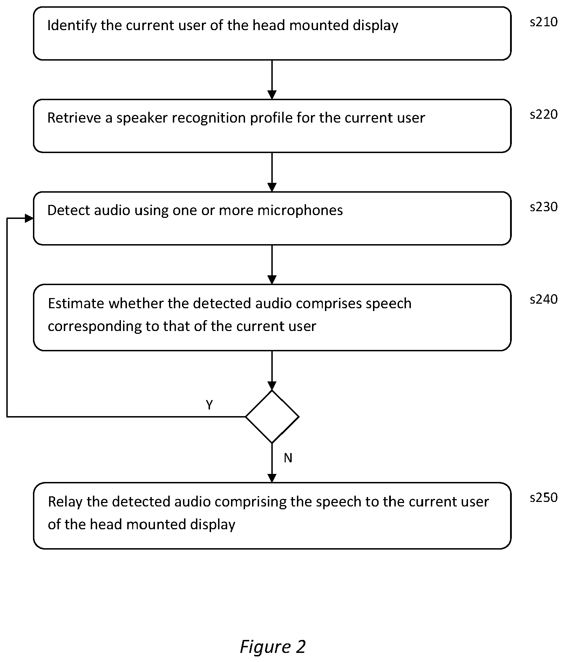

Referring now to Figure 2, in a summary embodiment of the present description an alert method for a head mounted display comprises the following steps.

A first step s210 comprises identifying the current user of the head mounted display, as described elsewhere herein.

A second step s220 comprises retrieving a speaker recognition profile for the current user, as described elsewhere herein.

A third step s230 comprises detecting audio using one or more microphones 90, as described elsewhere herein.

It will be appreciated that these steps may occur in any suitable order; for example where identification of a user is based on audio, the order may comprise the third step and second steps before the first step.

A fourth step s240 comprises estimating whether the detected audio comprises speech corresponding to that of the current user, based on the retrieved speaker recognition profile, as described elsewhere herein.

Then if the detected audio does not comprise speech corresponding to that of the current user, a fifth step s250 comprises relaying the detected audio comprising the speech to the current user of the head mounted display, as described elsewhere herein.

It will be apparent to a person skilled in the art that variations in the above method corresponding to operation of the various embodiments of the apparatus as described herein are considered within the scope of the present application, including but not limited to that:
- the step of identifying the current user comprises visual recognition of the user; and the step of retrieving a speaker recognition profile comprises retrieving a speaker recognition profile associated with that user, as described elsewhere herein;
- the step of identifying the current user comprises obtaining a sample of the current user's speech and identifying a speaker recognition profile that best matches the sample; and the step of retrieving a speaker recognition profile comprises keeping the speaker recognition profile identified as best matching the sample, as described elsewhere herein;
   - in this case, optionally the step of obtaining a sample of the current user's speech comprises one or more selected from the list consisting of obtaining a sample of speech from a microphone that is proximate to the mouth of the current user of the HMD, obtaining a sample of speech from a directional microphone or microphone array pointing substantially towards the mouth of the current user of the HMD, and obtaining a sample of speech from a plurality of microphones, the samples of the speech from respective microphones having a pattern of relative delay characteristic of being spoken by the current user at the HMD, as described elsewhere herein;
- the method comprises the step of estimating whether the detected audio comprises speech corresponding to a different speaker, based upon one or more additional speaker recognition profiles, and if so, identifying the different speaker, as described elsewhere herein;
   - in this case, optionally the method comprises the step of indicating the identity of the different speaker to the user of the head mounted display, as described elsewhere herein;
   - in this case, similarly optionally the method comprises the step of comparing the identity of the different speaker with a list of muted speakers, and if the different speaker is listed as a muted speaker (for example either due to being black listed or not being white listed), then not relaying the detected audio comprising the speech to the current user of the head mounted display, as described elsewhere herein;
- the method comprises the step of estimating whether the detected audio comprises a predetermined key word or phrase, and if so, relaying the detected audio to the user of the mounted display at least for a predetermined period of time, as described elsewhere herein; and
- the method comprises the step of estimating whether the detected audio comprises audio generated for content being presented to the head mounted display, and if so, not relaying the detected audio comprising the audio generated for the content to the user of the head mounted display, as described elsewhere herein;
   - in this case, optionally the step of estimating whether the detected audio comprises audio generated for the content comprises the steps of retaining the audio generated for the content in a buffer for a predetermined period of time, and comparing the retained audio in the buffer with the detected audio to detect an offset match, as described elsewhere herein;
      - in this case, optionally the step of not relaying the detected audio comprises subtracting the retained audio in the buffer, at an offset corresponding to the offset match, from the detected audio, as described elsewhere herein.

It will be appreciated that the above methods may be carried out on conventional hardware suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

Accordingly, in a summary embodiment of the present description, an alert system operable to implement the methods and/or techniques described herein (such as for example an entertainment system 10 like a video games console such as for example the PlayStation 5^{®}), for and typically in conjunction with a head mounted display 802, comprises the following.

Firstly, a user identification processor (such as GPU 30 and/or CPU 20) configured (for example by suitable software instruction) to identify the current user of the head mounted display, as described elsewhere herein.

Additionally, a retrieval processor (again such as GPU 30 and/or CPU 20) configured (again for example by suitable software instruction) to retrieve a speaker recognition profile for the current user from storage such as RAM 40 and/or SSD 50, or a remote storage accessible online (not shown), as described elsewhere herein.

Additionally, one or more microphones 90 for detecting audio, as described elsewhere herein.

Additionally, an audio processor (again such as GPU 30 and/or CPU 20) configured (again for example by suitable software instruction) to estimate whether the detected audio comprises speech corresponding to that of the current user, based on the retrieved speaker recognition profile, and if not, to relay the detected audio comprising the speech to the current user of the head mounted display, as described elsewhere herein.

Instances of this summary embodiment implementing the methods and techniques described herein (for example by use of suitable software instruction) are envisaged within the scope of the application, including but not limited to that:
- the audio processor is configured to estimate whether the detected audio comprises speech corresponding to a different speaker, based upon one or more additional speaker recognition profiles, and if so, to identify the different speaker, and the audio processor being configured to compare the identity of the different speaker with a list of muted speakers, and if the different speaker is listed as a muted speaker, then to not relay the detected audio comprising the speech to the current user of the head mounted display, as described elsewhere herein; and
- the audio processor is configured to estimate whether the detected audio comprises a predetermined key word or phrase, and if so, to relay the detected audio to the user of the mounted display at least for a predetermined period of time, as described elsewhere herein.

## Claims

1. An alert method for a head mounted display, comprising the steps of:
identifying (s210) the current user of the head mounted display;
retrieving (s220) a speaker recognition profile for the current user;
detecting (s230) audio comprising speech using one or more microphones;
estimating (s240) whether the detected audio does not comprise speech corresponding to that of the current user, based on the retrieved speaker recognition profile;
if it is estimated that the detected audio does not comprise speech corresponding to that of the current user, relaying (s250) the detected audio comprising the speech to the current user of the head mounted display, and if it is estimated that the detected audio does comprise speech corresponding to that of the current user, the detected audio is not relayed to the current user of the head mounted display;
further estimating whether the detected audio comprises speech corresponding to a different speaker, based upon one or more additional speaker recognition profiles;
in response to the estimation that the detected audio comprises speech corresponding to the different speaker, identifying the different speaker;
comparing the identity of the different speaker with a list of muted speakers; and
in response to the different speaker being listed as a muted speaker, not relaying the detected audio comprising the speech to the current user of the head mounted display.

2. The alert method of claim 1, in which
the step of identifying the current user comprises visual recognition of the user; and
the step of retrieving a speaker recognition profile comprises retrieving a speaker recognition profile associated with that user.

3. The alert method of claim 1 or claim 2, in which
the step of identifying the current user comprises obtaining a sample of the current user's speech and identifying a speaker recognition profile that best matches the sample; and
the step of retrieving a speaker recognition profile comprises keeping the speaker recognition profile identified as best matching the sample.

4. The alert method of claim 3, in which the step of obtaining a sample of the current user's speech comprises one or more selected from the list consisting of:
i. obtaining a sample of speech from a microphone that is proximate to the mouth of the current user of the HMD;
ii. obtaining a sample of speech from a directional microphone or microphone array pointing substantially towards the mouth of the current user of the HMD; and
iii. obtaining a sample of speech from a plurality of microphones, the samples of the speech from respective microphones having a pattern of relative delay characteristic of being spoken by the current user at the HMD.

5. The method of claim 1, comprising the step of
indicating the identity of the different speaker to the user of the head mounted display.

6. The method of any proceeding claim, comprising the step of:
estimating that the detected audio comprises a predetermined key word or phrase;
and in response to the estimation that the detected audio comprises the predetermined key word or phrase, relaying the detected audio to the user of the mounted display at least for a predetermined period of time.

7. The method of any preceding claim, comprising the step of:
estimating that the detected audio comprises audio generated for content being presented to the head mounted display;
and in response to the estimation that the detected audio comprises audio generated for content being presented to the head mounted display, not relaying the detected audio comprising the audio generated for the content to the user of the head mounted display.

8. The method of claim 7, in which:
the step of estimating whether the detected audio comprises audio generated for the content comprises the steps of:
retaining the audio generated for the content in a buffer for a predetermined period of time; and
comparing the retained audio in the buffer with the detected audio to detect a delay estimate representative of a delay between the generation of the audio for the content and the detection of the detected audio.

9. The method of claim 8, in which
the step of not relaying the detected audio comprises subtracting the retained audio in the buffer, at an offset corresponding to the delay estimate, from the detected audio.

10. A computer program comprising computer executable instructions which, when executed by a computer system cause the computer system to carry out the method of any one of the preceding claims.

11. An alert system (10) for a head mounted display (802), comprising:
a user identification processor (20, 30) configured to identify the current user of the head mounted display;
a retrieval processor (20, 30) configured to retrieve a speaker recognition profile for the current user from storage (40, 50);
one or more microphones (90) for detecting audio comprising speech;
an audio processor (20, 30) configured to:
estimate whether the detected audio does not comprise speech corresponding to that of the current user, based on the retrieved speaker recognition profile;
if it is estimated that the detected audio does not comprise speech corresponding to that of the current user, to relay the detected audio comprising the speech to the current user of the head mounted display, and if it is estimated that the detected audio does comprise speech corresponding to that of the current user, the detected audio is not relayed to the current user of the head mounted display, in which:
the audio processor is configured to further estimate whether the detected audio comprises speech corresponding to a different speaker, based upon one or more additional speaker recognition profiles, and in response to the estimation that the detected audio comprises speech corresponding to the different speaker, to identify the different speaker; and
the audio processor being configured to compare the identity of the different speaker with a list of muted speakers, and in response to the different speaker being listed as a muted speaker, to not relay the detected audio comprising the speech to the current user of the head mounted display.

12. The alert system of claim 11 in which:
the audio processor is configured to estimate that the detected audio comprises a predetermined key word or phrase, and in response to the estimation that the detected audio comprises the predetermined key word or phrase, to relay the detected audio to the user of the mounted display at least for a predetermined period of time.

## Patentansprüche

1. Warnverfahren für ein am Kopf angebrachtes Display, umfassend die folgenden Schritte:
Identifizieren (s210) des aktuellen Benutzers des am Kopf angebrachten Displays;
Abrufen (s220) eines Sprechererkennungsprofils für den aktuellen Benutzer;
Erfassen (s230) von Audiomaterial, das Sprache umfasst, unter Verwendung eines oder mehrerer Mikrofone;
Schätzen (s240), ob das erkannte Audiomaterial nicht Sprache umfasst, die der des aktuellen Benutzers entspricht, basierend auf dem abgerufenen Sprechererkennungsprofil;
wenn geschätzt wird, dass das erkannte Audiomaterial nicht Sprache umfasst, die der des aktuellen Benutzers entspricht, Weiterleiten (s250) des erkannten Audiomaterials, das die Sprache umfasst, an den aktuellen Benutzer des am Kopf angebrachten Displays, und wenn geschätzt wird, dass das erkannte Audiomaterial Sprache umfasst, die der des aktuellen Benutzers entspricht, wird das erkannte Audiomaterial nicht an den aktuellen Benutzer des am Kopf angebrachten Displays weitergeleitet;
ferner Schätzen, ob das erkannte Audiomaterial Sprache umfasst, die einem anderen Sprecher entspricht, basierend auf einem oder mehreren zusätzlichen Sprechererkennungsprofilen;
als Reaktion auf die Einschätzung, dass das erkannte Audiomaterial Sprache umfasst, die dem anderen Sprecher entspricht, Identifizieren des anderen Sprechers;
Vergleichen der Identität des anderen Sprechers mit einer Liste stumm geschalteter Sprecher und
als Reaktion darauf, dass der andere Sprecher als stumm geschalteter Sprecher aufgeführt ist, Nichtweiterleiten des erkannten Audiomaterials, das die Sprache umfasst, an den aktuellen Benutzer des am Kopf angebrachten Displays.

2. Verfahren nach Anspruch 1, in dem
der Schritt des Identifizierens des aktuellen Benutzers die visuelle Erkennung des Benutzers umfasst und
der Schritt des Abrufens eines Sprechererkennungsprofils das Abrufen eines mit diesem Benutzer verknüpften Sprechererkennungsprofils umfasst.

3. Warnverfahren nach Anspruch 1 oder Anspruch 2, in dem
der Schritt des Identifizierens des aktuellen Benutzers das Erhalten einer Probe der Sprache des aktuellen Benutzers und das Identifizieren eines Sprechererkennungsprofils, das am besten zur Probe passt, umfasst; und
der Schritt des Abrufens eines Sprechererkennungsprofils das Beibehalten des Sprechererkennungsprofils, das als am besten mit der Probe übereinstimmend identifiziert wurde, umfasst.

4. Warnverfahren nach Anspruch 3, in dem der Schritt des Erhaltens einer Probe der Sprache des aktuellen Benutzers eines oder mehrere ausgewählt aus der Liste umfasst, bestehend aus:
i. Erhalten einer Sprachprobe aus einem Mikrofon, das sich in der Nähe des Mundes des aktuellen Benutzers des HMD befindet;
ii. Erhalten einer Sprachprobe aus einem Richtmikrofon oder Mikrofonarray, das im Wesentlichen auf den Mund des aktuellen Benutzers des HMD gerichtet ist; und
iii. Erhalten einer Sprachprobe aus einer Vielzahl von Mikrofonen, wobei die Sprachproben der jeweiligen Mikrofone ein Muster relativer Verzögerung aufweisen, das dafür charakteristisch ist, vom aktuellen Benutzer am HMD gesprochen zu werden.

5. Verfahren nach Anspruch 1, umfassend den Schritt des
Angebens der Identität des anderen Sprechers für den Benutzer des am Kopf angebrachten Displays.

6. Verfahren nach einem der vorstehenden Ansprüche, umfassend den Schritt des:
Schätzens, dass das erkannte Audiomaterial ein vorbestimmtes Schlüsselwort oder einen vorbestimmten Schlüsselausdruck umfasst;
und als Reaktion auf die Einschätzung, dass das erkannte Audiomaterial das vorbestimmte Schlüsselwort oder den vorbestimmten Schlüsselausdruck umfasst, Weiterleitens des erkannten Audiomaterials an den Benutzer des angebrachten Displays mindestens für einen vorbestimmten Zeitraum.

7. Verfahren nach einem der vorstehenden Ansprüche, ferner umfassend den Schritt des:
Schätzens, dass das erkannte Audiomaterial Audiomaterial umfasst, das für Inhalte generiert wurde, die auf dem am Kopf angebrachten Display dargestellt werden;
und als Reaktion auf die Einschätzung, dass das erkannte Audiomaterial Audiomaterial umfasst, das für Inhalte generiert wurde, die auf dem am Kopf angebrachten Display dargestellt werden, Nichtweiterleitens des erkannten Audiomaterials, welches das für die Inhalte generierte Audiomaterial umfasst, an den Benutzer des am Kopf angebrachten Displays.

8. Verfahren nach Anspruch 7, in dem:
der Schritt des Schätzens, ob das erkannte Audiomaterial für die Inhalte generiertes Audiomaterial umfasst, die folgenden Schritte umfasst:
Speichern des für den Inhalt generierten Audiomaterials für einen vorbestimmten Zeitraum in einem Puffer und
Vergleichen des im Puffer gespeicherten Audiomaterials mit dem erkannten Audiomaterial, um eine Verzögerungsschätzung zu erkennen, die eine Verzögerung zwischen der Generierung des Audiomaterials für die Inhalte und der Erkennung des erkannten Audiomaterials darstellt.

9. Verfahren nach Anspruch 8, in dem
der Schritt des Nichtweiterleitens des erkannten Audiomaterials das Subtrahieren des im Puffer gespeicherten Audiomaterials mit einem der Verzögerungsschätzung entsprechenden Offset vom erkannten Audiomaterial umfasst.

10. Computerprogramm, umfassend computerausführbare Anweisungen, die, wenn sie von einem Computersystem ausgeführt werden, das Computersystem veranlassen, das Verfahren nach einem der vorstehenden Ansprüche auszuführen.

11. Warnsystem (10) für ein am Kopf angebrachtes Display (802), umfassend:
einen Benutzeridentifikationsprozessor (20, 30), der konfiguriert ist, um den aktuellen Benutzer des am Kopf angebrachten Displays zu identifizieren;
einen Abrufprozessor (20, 30), der konfiguriert ist, um ein Sprechererkennungsprofil für den aktuellen Benutzer aus der Speicherung (40, 50) abzurufen;
ein oder mehrere Mikrofone (90) zum Erkennen von Audiomaterial, das Sprache umfasst;
einen Audioprozessor (20, 30), der konfiguriert ist, um: zu schätzen, ob das erkannte Audiomaterial nicht Sprache umfasst, die der des aktuellen Benutzers entspricht, basierend auf dem abgerufenen Sprechererkennungsprofil; wenn geschätzt wird, dass das erkannte Audiomaterial nicht Sprache umfasst, die der des aktuellen Benutzers entspricht, das erkannte Audiomaterial, das die Sprache umfasst, an den aktuellen Benutzer des am Kopf angebrachten Displays weiterzuleiten, und wenn geschätzt wird, dass das erkannte Audiomaterial Sprache umfasst, die der des aktuellen Benutzers entspricht, das erkannte Audiomaterial nicht an den aktuellen Benutzer des am Kopf angebrachten Displays weiterzuleiten, wobei:
der Audioprozessor konfiguriert ist, um weiterhin zu schätzen, ob das erkannte Audiomaterial Sprache umfasst, die einem anderen Sprecher entspricht, basierend auf einem oder mehreren zusätzlichen Sprechererkennungsprofilen, und als Reaktion auf die Schätzung, dass das erkannte Audiomaterial Sprache umfasst, die dem anderen Sprecher entspricht, den anderen Sprecher zu identifizieren; und
der Audioprozessor konfiguriert ist, um die Identität des anderen Sprechers mit einer Liste stumm geschalteter Sprecher zu vergleichen, und als Reaktion darauf, dass der andere Sprecher als stumm geschalteter Sprecher aufgeführt wird, das erkannte Audio, das die Sprache umfasst, nicht an den aktuellen Benutzer des am Kopf angebrachten Displays weiterzuleiten.

12. System nach Anspruch 11, in dem
der Audioprozessor konfiguriert ist, um zu schätzen, dass das erkannte Audiomaterial ein vorbestimmtes Schlüsselwort oder einen vorbestimmten Schlüsselausdruck umfasst, und als Reaktion auf die Schätzung, dass das erkannte Audio das vorbestimmte Schlüsselwort oder den vorbestimmten Schlüsselausdruck umfasst, das erkannte Audiomaterial mindestens für einen vorbestimmten Zeitraum an den Benutzer des angebrachten Displays weiterleitet.

## Revendications

1. Procédé d'alerte destiné à un visiocasque, comprenant les étapes consistant à :
identifier (s210) l'utilisateur actuel du visiocasque ;
récupérer (s220) un profil de reconnaissance de locuteur pour l'utilisateur actuel ;
détecter (s230) de l'audio comprenant des paroles à l'aide d'un ou plusieurs microphones ;
estimer (s240) si l'audio détecté ne comprend pas de paroles correspondant à celles de l'utilisateur actuel, en fonction du profil de reconnaissance de locuteur récupéré ;
s'il est estimé que l'audio détecté ne comprend pas de paroles correspondant à celles de l'utilisateur actuel, transférer (s250) l'audio détecté comprenant les paroles à l'utilisateur actuel du visiocasque, et s'il est estimé que l'audio détecté comprend bien des paroles correspondant à celles de l'utilisateur actuel, l'audio détecté n'est pas transféré à l'utilisateur actuel du visiocasque ;
estimer en outre si l'audio détecté comprend des paroles correspondant à un locuteur différent, en fonction d'un ou plusieurs profils de reconnaissance de locuteur supplémentaires ;
en réponse à l'estimation que l'audio détecté comprend des paroles correspondant au locuteur différent, identifier le locuteur différent ;
comparer l'identité du locuteur différent à une liste de locuteurs mis en sourdine ; et
en réponse au locuteur différent étant listé en tant que locuteur mis en sourdine, ne pas transférer l'audio détecté comprenant les paroles à l'utilisateur actuel du visiocasque.

2. Procédé d'alerte selon la revendication 1, dans lequel
l'étape d'identification de l'utilisateur actuel comprend une reconnaissance visuelle de l'utilisateur ; et
l'étape de récupération d'un profil de reconnaissance de locuteur comprend la récupération d'un profil de reconnaissance de locuteur associé à cet utilisateur.

3. Procédé d'alerte selon la revendication 1 ou la revendication 2, dans lequel
l'étape d'identification de l'utilisateur actuel comprend l'obtention d'un échantillon de paroles de l'utilisateur actuel et l'identification d'un profil de reconnaissance de locuteur qui concorde le mieux avec l'échantillon ; et
l'étape de récupération d'un profil de reconnaissance de locuteur comprend la conservation du profil de reconnaissance de locuteur identifié comme concordant le mieux avec l'échantillon.

4. Procédé d'alerte selon la revendication 3, dans lequel l'étape d'obtention d'un échantillon de paroles de l'utilisateur actuel comprend un ou plusieurs choisis dans la liste constituée par :
i. l'obtention d'un échantillon de paroles à partir d'un microphone qui est à proximité de la bouche de l'utilisateur actuel du visiocasque ;
ii. l'obtention d'un échantillon de paroles à partir d'un microphone directionnel ou d'une matrice de microphones pointant sensiblement en direction de la bouche de l'utilisateur actuel du visiocasque ; et
iii. l'obtention d'un échantillon de paroles à partir d'une pluralité de microphones, les échantillons des paroles provenant de microphones respectifs ayant un motif de retard relatif caractéristique d'une prononciation par l'utilisateur actuel au niveau du visiocasque.

5. Procédé selon la revendication 1, comprenant l'étape consistant à
indiquer l'identité du locuteur différent à l'utilisateur du visiocasque.

6. Procédé selon l'une quelconque revendication précédente, comprenant l'étape consistant à :
estimer que l'audio détecté comprend un mot clé ou une expression prédéterminé(e) ;
et en réponse à l'estimation que l'audio détecté comprend le mot clé ou l'expression prédéterminé(e), transférer l'audio détecté à l'utilisateur du visiocasque au moins pendant un laps de temps prédéterminé.

7. Procédé selon l'une quelconque revendication précédente, comprenant l'étape consistant à :
estimer que l'audio détecté comprend de l'audio généré pour un contenu étant présenté au visiocasque ;
et en réponse à l'estimation que l'audio détecté comprend de l'audio généré pour un contenu étant présenté au visiocasque, ne pas transférer l'audio détecté comprenant l'audio généré pour le contenu à l'utilisateur du visiocasque.

8. Procédé selon la revendication 7, dans lequel :
l'étape consistant à estimer si l'audio détecté comprend de l'audio généré pour le contenu comprend les étapes consistant à :
conserver l'audio généré pour le contenu dans une mémoire tampon pendant un laps de temps prédéterminé ; et
comparer l'audio conservé dans la mémoire tampon à l'audio détecté pour détecter une estimation de retard représentative d'un retard entre la génération de l'audio pour le contenu et la détection de l'audio détecté.

9. Procédé selon la revendication 8, dans lequel
l'étape consistant à ne pas transférer l'audio détecté comprend la soustraction de l'audio conservé dans la mémoire tampon, à un décalage correspondant à l'estimation de retard, de l'audio détecté.

10. Programme d'ordinateur comprenant des instructions exécutables par un ordinateur qui, lorsqu'elles sont exécutées par un système d'ordinateur, amènent le système d'ordinateur à effectuer le procédé selon l'une quelconque des revendications précédentes.

11. Système d'alerte (10) destiné à un visiocasque (802), comprenant :
un processeur d'identification d'utilisateur (20, 30) configuré pour identifier l'utilisateur actuel du visiocasque ;
un processeur de récupération (20, 30) configuré pour récupérer un profil de reconnaissance de locuteur pour l'utilisateur actuel dans un stockage (40, 50) ;
un ou plusieurs microphones (90) permettant de détecter de l'audio comprenant des paroles ;
un processeur audio (20, 30) configuré pour : estimer si l'audio détecté ne comprend pas de paroles correspondant à celles de l'utilisateur actuel, en fonction du profil de reconnaissance de locuteur récupéré ; s'il est estimé que l'audio détecté ne comprend pas de paroles correspondant à celles de l'utilisateur actuel, pour transférer l'audio détecté comprenant les paroles à l'utilisateur actuel du visiocasque, et s'il est estimé que l'audio détecté comprend bien des paroles correspondant à celles de l'utilisateur actuel, l'audio détecté n'est pas transféré à l'utilisateur actuel du visiocasque, dans lequel :
le processeur audio est configuré pour estimer en outre si l'audio détecté comprend des paroles correspondant à un locuteur différent, en fonction du ou des profils de reconnaissance de locuteur supplémentaires, et en réponse à l'estimation que l'audio détecté comprend des paroles correspondant au locuteur différent, pour identifier le locuteur différent ; et
le processeur audio étant configuré pour comparer l'identité du locuteur différent à une liste de locuteurs mis en sourdine, et en réponse au locuteur différent étant listé en tant que locuteur mis en sourdine, pour ne pas transférer l'audio détecté comprenant les paroles à l'utilisateur actuel du visiocasque.

12. Système d'alerte selon la revendication 11 dans lequel :
le processeur audio est configuré pour estimer que l'audio détecté comprend un mot clé ou une expression prédéterminé(e), et en réponse à l'estimation que l'audio détecté comprend le mot clé ou l'expression prédéterminé(e), pour transférer l'audio détecté à l'utilisateur du visiocasque au moins pendant un laps de temps prédéterminé.
